# EUROPÄISCHE PATENTSCHRIFT

(11) **EP 1 296 867 B1**
(45) Veröffentlichungstag und Bekanntmachung des Hinweises auf die Patenterteilung: **21.04.2004**
(21) Anmeldenummer: 01911654.0
(22) Anmeldetag: 17.02.2001
(51) Int. Cl.: B61D 17/04

(54) **FLÄCHENELEMENT UND VERFAHREN ZUM HERSTELLEN EINES FLÄCHENELEMENTS**
PLANAR ELEMENT AND METHOD FOR PRODUCING A PLANAR ELEMENT
ELEMENT PLAT ET PROCEDE DE FABRICATION DUDIT ELEMENT PLAT

(30) Priorität: 21.02.2000 DE 10009106
(43) Veröffentlichungstag der Anmeldung: 02.04.2003
(73) Patentinhaber: Bombardier Transportation GmbH, 13627 Berlin (DE)
(72) Erfinder: CARSTENSEN, Hartmut, 13507 Berlin (DE); BUCHWALD, Peter, 13562 Bergfelde (DE); MEYER, Ina, 16515 Friedrichsthal (DE)
(74) Vertreter: Meyer, Hans-Joachim
(86) Internationale Anmeldenummer: PCT/EP2001/001781
(87) Internationale Veröffentlichungsnummer: WO 2001/062571

(56) Entgegenhaltungen:
- EP-A- 0 561 369
- EP-A- 0 905 000
- DE-A- 19 501 805
- DE-U- 29 601 399
- GB-A- 2 123 357

## Beschreibung

Die Erfindung bezieht sich auf ein Verfahren zum Herstellen eines Flächenelements, für Wagenkästen in Differentialbauweise, das eine Außenbeplankung und aussteifende Mittel umfaßt, wobei Profile und Profilknoten in vorgegebener Anordnung an der Außenbeplankung vorgesehen sind, und auf ein Flächenelement.

Wagenkästen, beispielsweise für den Personenverkehr, werden aus verschiedenen Komponenten aufgebaut. Zu diesen Komponenten gehören u. a. Flachenelemente. Die Flächenelemente setzen sich wiederum aus mehreren Blechen und Halbzeugen zusammen, welche miteinander gefügt werden. Als Fügetechnik finden hier verschiedene Schweißtechniken, wie beispielsweise Punktschweißen und konventionelles Lichtbogenschweißen ihre Anwendung.

Im Schienenfahrzeugbau ist es bisher üblich und ganz allgemein bekannt, Bauteile für Wagenkästen von Schienenfahrzeugen in Differentialbauweise auszubilden, wobei ein aus Profilen gefügtes Stabwerk oder Gitterwerk mit einer Außenbeplankung versehen wird, die derart mit dem Stabwerk verbunden wird, daß schubsteife Flächenelemente entstehen. In den zwischen den Gitterstäben liegenden Flächen ist die Beplankung innenseitig außerdem durch linienhafte, im Querschnitt häufig Z-förmige Profile als Beulsteifen zusätzlich verstärkt, um die notwendige Beulsteifigkeit der Außenbeplankung zu erreichen.

Aus der GB 885,279 ist bekannt, ein Gitterwerk für Großkarosserien aus hutförmigen Profilen auszubilden, die an Ihren Kreuzungsstellen von ebenfalls hutförmig ausgebildeten Profilknoten übergriffen und mit diesen form- und kraftschlüssig gefügt sind.

Als Fügeverfahren werden in den vorgenannten Fällen für die Herstellung des Stab- oder Gitterwerks, für das Fügen mit der Außenbeplankung sowie das anschließende Aufbringen der linienhaften Beulsteifen vollständig oder wenigstens streckenweise thermische Fügeverfahren verwendet. Nachteilig für alle diese Fügeverfahren ist, daß bei der Formgebung des Stab- oder Gitterwerks hohe Genauigkeit gesichert und dafür entsprechender Aufwand erbracht werden muß, und daß die eingebrachte Wärme in allen Bauteilen zu unerwünschten Spannungen und Verzug führt, die eine zeit- und kostenaufwändige Nacharbeit erfordern, um die gewünschte Gestalt und Oberflächenebenheit der Flächenelemente herzustellen und innerhalb der geforderten Toleranzen zu bleiben.

Zudem entsteht ein erheblicher thermischer Verzug, der sich im Auftreten von Beulen bemerkbar macht und die Oberflächenqualität negativ beeinflußt. Zum Ausgleich des Verzuges sind umfangreiche Richt- und Spannarbeiten sowie Nacharbeiten durch neuerliches Schleifen erforderlich. Die entstehenden Maßtoleranzen führen zu einem erhöhten Anpaßaufwand in der Endmontage. Die bekannten Fügeverfahren machen einen nachträglichen umfangreichen Korrosionsschutz erforderlich oder bedingen den Einsatz kostenintensiver Edelstähle. Zum Erzeugen einer geeigneten Flächenbeulsteifigkeit ist es erforderlich die Flächenelemente in einer Nachbehandlung thermisch zu spannen und mit Profilbeulsteifen zu versehen.

Außerdem hemmen oder verhindern diese Fügeverfahren den Einsatz von Werkstoffen, die bereits anorganische und/oder organische Korrosionsschutzschichten, die Herstellung von weitgehend vorgefertigten Bauteilen, die z.B. bereits eine Warmedammung oder eine endgültige Farbgebung tragen, sowie die Herstellung von aus unterschiedlichen Werkstoffen (darunter Faserverbundwerkstoffe) gefügten Hybrid-Bauteilen.

Bei der Fertigung von Schienenfahrzeugen wird deshalb zunehmend versucht, die thermischen Fügeverfahren durch Kaltfügeverfahren zu ersetzen.

In der DE 195 01 805 A1 die dem nächstliegenden Stand der Technik entspricht, wird offenbart, ein Gitterwerk und linienhafte Beulsteifen mit einer Außenbeplankung mittels eines Klebeverfahrens zu fügen. Diese Technologie ist nicht für alle Einsatzfälle brauchbar und kostengünstig.

Die WO 97/14596 A1 beschreibt Modulelemente in Differentialbauweise und deren Herstellungsverfahren. Die Modulelemente umfassen eine Außenhaut, diese tragende konturgebende Spantprofile mit einer zur Innenseite der Außenhaut orientierten Auflagefläche sowie die Enden der Spantprofile miteinander verbindende, zum Verbinden zweier aneinandergrenzender Modulelemente paarweise entlang einer Trennfuge aneinanderlegbare Randprofile mit Aussparungen zum Durchstecken von zum Verbinden der Modulelemente kaltfügbaren Verbindungsmitteln. Die Aussparungen in den Randprofilen sind jeweils im Bereich eines Spantendes angeordnet. Die Spantenden sind jeweils mit den Spantfüßen fest verbunden. Die Spantfüße dienen zum Herstellen direkter form- und kraftschlüssiger Verbindungen zwischen korrespondierenden Spantfüßen aneinandergrenzender Modulelemente mittels der kaltfügbaren Verbindungsmittel und sind ihrerseits durch Kaltfügeverbindungen mit den Randprofilen im Bereich der jeweiligen Aussparung fest verbunden.
Zur Herstellung eines derartigen Modulelements wird eine Anzahl konturgebender Spantprofile auf eine vorbestimmte Länge geschnitten. Für jeden Längsrand des Modulelements wird ein Randprofil zugeschnitten und mit Aussparungen an den Verbindungsstellen mit den Spantprofilen versehen. Die Randprofile werden an den parallel mit fluchtenden Enden aufgereihten Spanten mittels an deren Enden befestigter Spantfüße kalt befestigt, welch letztere auch zum Verbinden der Modulelemente untereinander dienen. Eine seitenparallel abgerichtete Außenhaut wird auf zur Außenhaut hin gewandte Auflagefläche der Spanten aufgelegt und mit diesen Auflageflächen und mit den Randprofilen kalt dauerhaft verbunden.
Diese Technologie verlangt teilweise hohen Aufwand für Vorrichtungen und Werkzeuge, ist konstruktiv relativ unfrei und aufwändig. Hohlkammerprofile lassen sich nur aufwendig gestalten und erstellen, wobei teure und unflexible Gußknoten verwendet werden und kein Toleranzausgleich gegeben ist. Auch die Randgestaltungen der Flächenelemente im Bereich Profil/Blech erweisen sich als sehr aufwendig.
Die EP 0 369 134 A1 offenbart eine Fahrzeugzelle, insbesondere für ein Schienenfahrzeug, bestehend aus einem Traggerüst und an diesem befestigten Sandwichteilen, die jeweils eine äußere und eine innere Deckschicht und eine zwischen diese eingeklebte Stützschicht enthalten. Die Fahrzeugzelle ist aus einzeln fertiggestellten Zellmodulen aufgebaut, die jeweils in Integralbauweise als Sandwichstruktur mit im Bereich der Stützschicht eingefügten, an den Deckschichten befestigten Traggerüstteilen ausgebildet und randseitig an den Traggerüstteilen mit Passverbindungen zum Zusammenfügen der Zellmodule versehen sind.
In P.Cordes, V. Hüller: Moderne Stahl-Leichtbaustrukturen für den Schienenfahrzeugbau; Blech Rohre Profile 42 (1995) 12 S. 773 - 777 ist u. a. die Verwendung einer Höckerplatte beschrieben. Bei dieser Höckerplatte ist ein Glattblech mit einem zweiten Blech verbunden, in das in einem definierten Raster Kegel- oder Pyramidenstümpfe eingeformt wurden. Über jeweils einen Schweißpunkt im Höckerboden werden Glattblech und Höckerblech miteinander verbunden.
Die DE 197 42 772 A1 beinhaltet einen Zwischenboden für einen doppelstöckigen Eisenbahnwagen zur Trennung des oberen Stockwerks vom unteren. Der Zwischenboden ersteckt sich von einer Wagenlängsseite zur anderen und über einen Abschnitt der Wagenlänge. Er besteht aus mehreren flachen, rechteckigen, nebeneinanderliegenden Sandwich-Elementen, die sich mit ihren schmalen Stirnseiten von einer Wagenlängsseite zur anderen erstrecken und daselbst jeweils auf einem in Wagenlängsrichtung verlaufenden Träger aufliegen, während sie mit ihren breiten Längsseiten jeweils mit einem hohlen und biegeweichen Balken verbunden sind, der sich quer wenigstens über einen Abschnitt der inneren Breite des Wagens erstreckt.

In einer Ausführungsform bestehen die Sandwich-Elemente aus zwei Blechen, die eine Zellenstruktur aufweisen, indem in die Bleche jeweils Vertiefungen durch Tiefziehen eingeformt sind. Die Spitzen der Vertiefungen berühren sich und sind miteinander verschweißt.

Der Erfindung liegt somit die Aufgabe zugrunde, ein Verfahren zum Herstellen eines Flächenelements für Wagenkästen in Differentialbauweise anzugeben, das die Nachteile bekannter Verfahren vermeidet, wobei Flächenelemente mit geringer Toleranzspanne und einer hohen Oberflächengüte gefertigt werden. Außerdem soll ein nach dem erfindungsgemäßen Verfahren hergestelltes Flächenelement angegeben werden.

Diese Aufgabe wird durch ein Verfahren zum Herstellen eines Flächenelements für Wagenkästen in Differentialbauweise mit den Merkmalen des Anspruchs 1 gelöst.

Außerdem wird diese Aufgabe durch ein so hergestelltes Flächenelement gelöst.

Mit dem Verfahren zum Herstellen eines Flächenelements wird eine hohe Flächenbeulsteifigkeit der Blechfelder erzielt. Es treten nur geringe Toleranzspannen auf, wobei das Einebnen des Bleches durch den Klebeprozeß automatisch erfolgt. Durch Anwendung des Verfahrens wird eine vielseitige Funktionsintegration erreicht, wobei Korrosionsschutz und Schallisolierung im Vordergrund stehen. Durch die Verwendung von Kaltfügeverfahren werden sehr geringe Bauteiltoleranzen erreicht. Außerdem werden erhebliche finanzielle Einsparungen durch den Wegfall von lohnintensiven Prozessen erzielt, wie beispielsweise Richten, Sandstrahlen, Spannen, Schleifen und Spachteln. Zudem werden auch Kosten im Materialbereich eingespart. Auf Grundanstriche kann verzichtet werden, wohingegen nur Zwischenanstriche, Decklack oder Folie erforderlich sind. Mit dem vorliegenden Verfahren wird zudem ein Aufbau in Hybridbauweise sowie in modularer Bauweise ermöglicht. Es können Flächenelemente mit verschiedenen Profilen erzeugt werden, beispielsweise eine ebene oder eine gekrümmte Seitenwand.

Vorzugsweise wird im zweiten und dritten Schritt vollständig kaltgefügt. Durch einen Verzicht auf den Einsatz von Schweißverfahren werden die bereits angegebenen Vorteile weiterhin optimiert.

Insbesondere kann das Kaltfügen mit Schließringbolzen, Stanznieten oder Durchsetzfügen durchgeführt werden. Auch eine Kombination von Stanznieten, Schließringbolzen und Durchsetzfügen ist denkbar. Diese Fügetechniken gewährleisten Fügungen mit geringen Toleranzen, da ein schwer zu berechnender Schrumpfprozeß, welcher beim Schweißen nicht zu vermeiden ist, vermieden werden kann.

In einer weiteren Ausgestaltung der Erfindung werden die Profile und Profilknoten wenigstens teilweise in einer Vorrichtung angeordnet und gefügt. Sozusagen mit Hilfe einer Form oder Schablone können die Komponenten des Gerippes in die vorgegebene Anordnung gebracht werden. Ein Spielraum für Ungenauigkeiten wird somit nahezu ausgeschlossen. Im Zusammenwirken mit den Kaltfügetechniken ist die Erstellung eines Gerippes mit höchster Präzision gewährleistet.

Vorzugsweise wird das aussteifende Mittel mit der Außenbeplankung in einem Vakuumsackverfahren verklebt. Beispielsweise werden die zu verklebenden Bleche in eine luftdichte Verpackung, insbesondere in eine Folie, eingebracht, in welcher anschließend ein Unterdruck erzeugt wird, so daß das aussteifende Mittel auf die Beplankung und diese auf eine Ebene bzw. Form, beispielsweise für eine gekrümmte Seitenwand, drückt. Mit diesem sogenannten Vakuumsackverfahren können auf eine kostengünstige Art und Weise ebene Flächen mit höchster Präzision erzeugt werden. Das Verfahren erweist sich als unabhängig von der Größe des Flächenelements. Aufwendige individuell von der Größe der Flächenelemente abhängige Vorrichtungen zum Herstellen von ebenen Flachenelementen werden nicht mehr benötigt.

Vorteilhafte Weiterbildungen ergeben sich aus den Unteranspruchen.

Die Erfindung wird anhand eines Ausführungsbeispieles in Verbindung mit den beiliegenden Zeichnungen näher erläutert. Es zeigen:
- FIG 1: einen Ausschnitt eines Flächenelements für Wagenkästen in Differentialbauweise in Draufsicht in schematischer Darstellung;
- FIG 2: einen Schnitt aus FIG 1 entlang der Linie A-A.

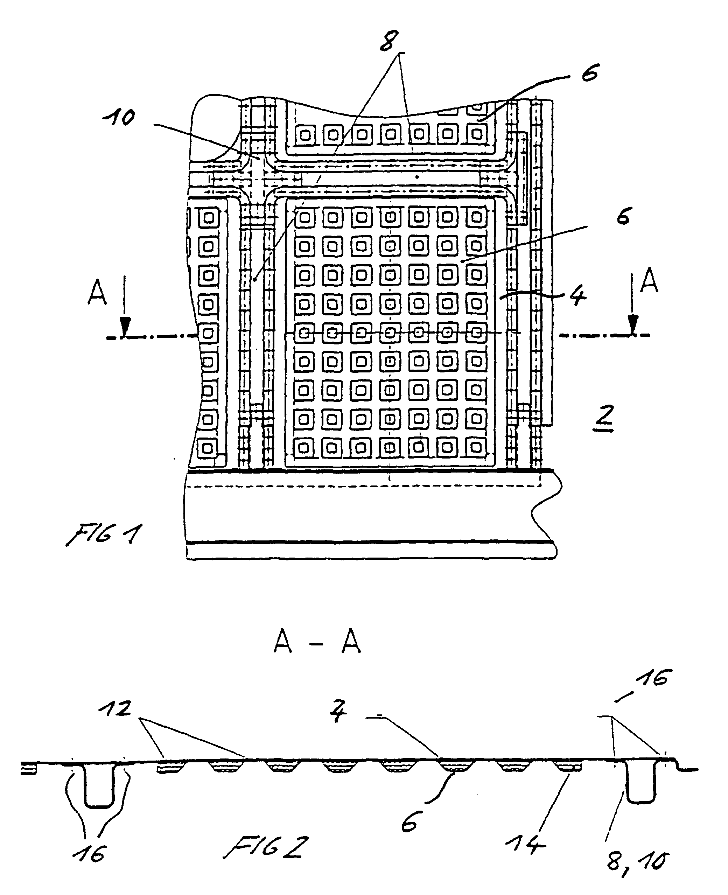

FIG 1 zeigt einen Ausschnitt eines Flächenelements 2 in Draufsicht in schematischer Darstellung. Das Flächenelement 2 umfaßt eine Außenbeplankung 4 und Höckerbleche 6, die auf der Außenbeplankung 4 angeordnet sind. Auf der Außenbeplankung 4 sind höckerblechseitig Profile 8 angeordnet, die über Profilknoten 10 miteinander verbunden sind. In nicht weiter dargestellten Ausführungsbeispielen können anstelle der Höckerbleche 6 als aussteifende Mittel beispielsweise auch ein profiliertes Blech, eine Kombination aus Schaum und Deckblech oder ein Faserverbundhalbzeug vorgesehen sein.

Beim vorliegenden Verfahren zum Herstellen des Flächenelements 2 werden in einem ersten Schritt die Höckerbleche 6 mit der Außenbeplankung 4 verklebt, welche dann steif miteinander verbunden sind. In einem zweiten Schritt werden die Profile 8 und die Profilknoten 10 in vorgegebener Weise angeordnet und wenigstens teilweise mit einem Kaltfügeverfahren zu einem Gerippe gefügt. In einem dritten Schritt wird das Gerippe wenigstens teilweise mit einem Kaltfügeverfahren mit der Außenbeplankung 4 höckerblechseitig gefügt. Alternativ kann im zweiten und dritten Schritt auch vollständig kaltgefügt werden. In diesem Ausführungsbeispiel werden als Profile 8 für die Gerippebildung Hutprofile verwendet. Es sind aber auch andere Profile für den Einsatz denkbar.

Die Profile 8 und Profilknoten 10 werden wenigstens teilweise in einer Vorrichtung angeordnet und vorgefügt.Mit Hilfe einer Form oder Schablone werden die Profile 8 und Profilknoten 10 des Gerippes bereits in die endgültige Anordnung gebracht. Ein Spielraum für Ungenauigkeiten wird somit nahezu ausgeschlossen. Im Zusammenwirken mit den Kaltfügetechniken ist die Erstellung eines Gerippes mit höchster Präzision gewährleistet.

Die Höcker des Höckerblechs 6 können in flächig regelmäßiger Anordnung in sich kreuzenden, horizontal und vertikal oder in sich kreuzenden, schräg verlaufenden Reihen ausgebildet sein.

In einem weiteren nicht dargestellten Ausführungsbeispiel sind die Höcker des Höckerblechs 6 in flächig unregelmäßiger Anordnung ausgebildet, wobei in Bereichen die eine höhere Beulsteifigkeit aufweisen müssen, eine größere Anzahl Höcker in geringeren Abständen angeordnet ist, und dementsprechend in Bereichen mit niedrigerer geforderter Beulsteifigkeit eine geringere Anzahl von Höckern vorgesehen ist.

An den Stoßstellen oder Kreuzungsstellen der Profile 8 sind die Profilknoten 10 angeordnet, die die aneinander stoßenden oder sich kreuzenden Profile 8 übergreifen, mit den Profilen 8 verbunden sind und die Stoßstellen oder Kreuzungsstellen der Profile 8 versteifen. Ein Teil der Profile 8 und die diesen zugewandten Enden der Profilknoten 10 weisen einen hutförmigen Querschnitt auf. Die Profilknoten 10 werden mittels Tiefziehtechnik hergestellt.

FIG 2 zeigt einen Schnitt aus FIG 1 entlang der Linie A-A. Die Außenbeplankung 4 ist mit den Höckerblechen 6 mittels eines Klebers 12 gefügt. Außerdem befindet sich in den augebildeten Räumen zwischen der Außenbeplankung 4 und dem Höckerblech 6 ein Isolierstoff 14. Die Fügung erfolgt vorzugsweise in einem Vakuumsackverfahren. Die zu verklebende Anordnung wird in diesem Ausführungsbeispiel in eine luftdichte Verpackung, beispielsweise in eine Folie, eingebracht, in welcher anschließend ein Unterdruck erzeugt wird. Das Andrücken des Höckerblechs an die Außenbeplankung kann aber auch auf andere Art und Weise erfolgen.

Das Gerippe, nämlich das Gebilde aus Profilen 8 und Profilknoten 10, wird in dem vorliegenden Ausführungsbeispiel mit Hilfe von Stanznieten 16 kaltgefügt. In einem weiteren nicht dargestellten Ausführungsbeispiel erfolgt das Kaltfügen mit Hilfe von Schließringbolzen oder Durchsetzfügen. Auch eine Kombination der Kaltfügetechniken ist geeignet.

Mit dem vorliegenden Verfahren zum Herstellen eines Flächenelements 2 wird eine hohe Flächenbeulsteifigkeit der Außenbeplankung 4 und damit des gesamten Flächenelements 2 erzielt. Es treten nur geringe Toleranzspannen auf, wobei das Einebnen des Bleches durch den Klebeprozeß automatisch erfolgt.

## Patentansprüche

1. Verfahren zum Herstellen eines Flächenelements (2) für Wagenkästen in Differentialbauweise, das eine Außenbeplankung (4) und ein aussteifendes Mittel umfaßt, wobei Profile (8) und Profilknoten (10) in vorgegebener Anordnung an der Außenbeplankung (4) vorgesehen sind,
**dadurch gekennzeichnet, daß**
- in einem ersten Schritt ein flächig ausgebildetes aussteifendes Mittel verwendet und mit der Außenbeplankung (4) verklebt wird,
- in einem zweiten Schritt Profile (8) und Profilknoten (10) angeordnet und wenigstens teilweise mit einem Kaltfügeverfahren zu einem Gerippe gefügt werden, und
- das Gerippe in einem dritten Schritt wenigstens teilweise mit einem Kaltfügeverfahren mit der Außenbeplankung (4) auf der Seite des aussteifenden Mittels zusammengefügt wird.

2. Verfahren nach Anspruch 1,
**dadurch gekennzeichnet, daß**
im zweiten und dritten Schritt vollständig kaltgefügt wird.

3. Verfahren nach Anspruch 1 oder 2,
**gekennzeichnet durch**
Kaltfügen mit Stanznieten (16).

4. Verfahren nach einem der Ansprüche 1 bis 3,
**gekennzeichnet durch**
Kaltfügen mit Schließringbolzen oder Durchsetzfügen.

5. Verfahren nach einem der Ansprüche 1 bis 4,
**dadurch gekennzeichnet, daß**
die Profile (8) und die Profilknoten (10) wenigstens teilweise in einer Vorrichtung angeordnet und gefügt werden.

6. Verfahren nach einem der Ansprüche 1 bis 5,
**dadurch gekennzeichnet, daß**
das aussteifende Mittel mit der Außenbeplankung (4) in einem Vakuumsackverfahren verklebt wird.

7. Flächenelement, hergestellt durch das Verfahren nach einem der Ansprüche 1 bis 6, wobei das Flächenelement eine Außenbeplankung (4) und ein flächig ausgebildetes aussteifendes Mittel (6) umfaßt und Profile (8) und Profilknoten (10) in vorgegebener Anordnung an der Außenbeplankung (4) vorgesehen sind, und wobei:
- das flächig ausgebildete aussteifende Mittel (6) mit der Außenbeplankung (4) verklebt ist,
- die Profile (8) und Profilknoten (10) mindestens teilweise mit einem Kaltfügeverfahren zu einem Gerippe gefügt sind, und
- dieses Gerippe wenigstens teilweise mit einem Kaltfügeverfahren mit der Außenbeplankung (4) auf der Seite des aussteifenden Mittels (6) zusammengefügt ist.

8. Flächenelement nach Anspruch 7,
**dadurch gekennzeichnet, daß**
als aussteifende Mittel Höckerbleche (6) mit der Außenbeplankung (4) steif verbunden sind.

9. Flächenelement (2) nach Anspruch 8,
**dadurch gekennzeichnet, daß**
die Höcker des Höckerblechs (6) in flächig regelmäßiger Anordnung in sich kreuzenden, horizontal und vertikal verlaufenden Reihen ausgebildet sind.

10. Flächenelement (2) nach Anspruch 8,
**dadurch gekennzeichnet, daß**
die Höcker des Höckerblechs (6) in flächig regelmäßiger Anordnung in sich kreuzenden, schräg verlaufenden Reihen ausgebildet sind.

11. Flächenelement (2) nach Anspruch 8,
**dadurch gekennzeichnet, daß**
die Höcker des Höckerblechs (6) in flächig unregelmäßiger Anordnung ausgebildet sind, wobei in Bereichen, die eine höhere Beulsteifigkeit aufweisen müssen, eine größere Anzahl Höcker in geringeren Abständen angeordnet ist, und umgekehrt.

12. Flächenelement (2) nach einem der Ansprüche 7 bis 11,
**dadurch gekennzeichnet, daß**
an Stoßstellen oder Kreuzungsstellen der Profile (8) Profilknoten (10) angeordnet sind, die die aneinander stoßenden oder sich kreuzenden Profile (8) übergreifen, mit den Profilen (8) verbunden sind und die Stoßstellen oder Kreuzungsstellen der Profile (8) versteifen.

13. Flächenelement (2) nach Anspruch 12,
**dadurch gekennzeichnet, daß**
wenigstens ein Teil der Profile (8) und die diesen zugewandten Enden der Profilknoten (10) hutförmigen Querschnitt aufweisen.

14. Flächenelement (2) nach Anspruch 13,
**dadurch gekennzeichnet, daß**
die Profilknoten (10) mittels Tiefziehtechnik hergestellt sind.

15. Flächenelement nach Anspruch 7,
**dadurch gekennzeichnet, daß**
als aussteifende Mittel ein profiliertes Deckblech, Schaum und Deckblech oder eine Faserverbundhalbzeug vorgesehen ist.

## Claims

1. A method for producing a planar element (2) for car bodies in differential construction, which includes an external skin (4) and a stiffening means, profiles (8) and profile nodes (10) being provided in a predetermined arrangement on the external skin (4),
**characterized in that**
- in a first step, a stiffening means implemented as planar is used and is glued to the external skin (4),
- in a second step, profiles (8) and profile nodes (10) are arranged and joined into a frame, at least partially using a cold joining method, and
- in a third step, the frame is joined to the external skin (4) on the side of the stiffening means, at least partially using a cold joining method.

2. The method according to Claim 1
**characterized in that** cold joining in the second and third steps is entirely performed.

3. The method according to one of Claims 1 or 2,
**characterized by** cold joining using punch rivets (16).

4. The method according to one of Claims 1 to 3,
**Characterized by** cold joining using locking ring bolts or interspersed joining.

5. The method according to one of Claims 1 to 4,
**characterized in that** the profiles (8) and the profile nodes (10) are arranged and joined at least partially in a device.

6. The method according to one of Claims 1 to 5,
**characterized in that** the stiffening means is glued to the external skin (4) in a vacuum bag method.

7. A planar element produced by the method according to one of Claims 1 to 6, wherein the planar element includes an external skin (4) and a stiffening means (6) implemented as planar, profiles (8) and profiles nodes (10) being provided in a predetermined arrangement on the external skin (4), and wherein
- the stiffening means implemented as planar is glued to the external skin (4),
- the profiles (8) and profile nodes (10) are joined at least partially into a frame by using a cold joining method, and
- said frame is joined at least partially to the external skin (4) on the side of the stiffening means by using a cold joining method.

8. The planar element according to Claim 7, **characterized in that** hump plates (6) as stiffening means are rigidly connected to the external skin (4).

9. The planar element (2) according to Claim 8,
**characterized in that** the humps of the hump plate (6) are implemented in a plane, regular arrangement and in intersecting rows running horizontally and vertically.

10. The planar element (2) according to Claim 8,
**characterized in that** the humps of the hump plate (6) are implemented in a plane, regular arrangement and in intersecting rows running diagonally.

11. The planar element (2) according to Claim 8,
**characterized in that** the humps of the hump plate (6) are implemented in a flat, irregular arrangement, a larger number of humps being arranged at smaller intervals in regions which must have a higher buckling resistance, and vice versa.

12. The planar element (2) according to one of Claims 7 to 11,
**characterized in that** profile nodes (10), which overlap the abutting or intersecting profiles (8), which are connected to the profiles (8), and which stiffen the butts or intersections of the profiles (8), are arranged at the butts or intersections of the profiles (8).

13. The planar element (2) according to Claim 12,
**characterized in that** at least a part of the profiles (8) and the ends of the profile nodes (10) facing them have cap-shaped cross-sections.

14. The planar element (2) according to Claim 13,
**characterized in that** the profile nodes (10) are produced using deep-drawing technology.

15. The planar element according to Claim 7, **characterized in that** a profiled cover plate, foam and cover plate, or a fiber composite semifinished product is provided as a stiffening means.

## Revendications

1. Procédé de fabrication d'un élément bidimensionnel (2) pour caisses de voitures selon un mode de construction différentiel, comprenant un revêtement extérieur (4) et un moyen de raidissement, dans lequel des profilés (8) et des noeuds profilés (10) sont prévus selon une disposition prédéfinie sur le revêtement extérieur (4), **caractérisé en ce que**
- dans une première phase, on utilise un moyen de raidissement plan et on le colle au revêtement extérieur (4),
- dans une deuxième phase, des profilés (8) et des noeuds profilés (10) sont disposés et assemblés en une ossature, au moins partiellement dans un procédé d'assemblage à froid, et
- dans une troisième phase, l'ossature est assemblée au revêtement extérieur (4), au moins partiellement dans un procédé d'assemblage à froid, du côté du moyen de raidissement.

2. Procédé selon la revendication 1, **caractérisé en ce que** dans les deuxième et troisième phases, on assemble complètement à froid.

3. Procédé selon la revendication 1 ou 2, **caractérisé par** l'assemblage à froid avec rivets pour découpage (16).

4. Procédé selon l'une des revendications 1 à 3, **caractérisé par** l'assemblage à froid avec des boulons à bagues de serrage ou l'assemblage avec des joints traversants.

5. Procédé selon l'une des revendications 1 à 4, **caractérisé en ce que** les profilés (8) et les noeuds profilés (10) sont disposés et assemblés au moins partiellement dans un dispositif.

6. Procédé selon l'une des revendications 1 à 5, **caractérisé en ce que** le moyen de raidissement est collé au revêtement extérieur (4) dans un procédé au sac sous vide.

7. Elément bidimensionnel fabriqué selon le procédé suivant l'une des revendications 1 à 6, l'élément bidimensionnel comprenant un revêtement extérieur (4) et un moyen de raidissement plan (6) et des profilés (8) et des noeuds profilés (10) étant prévus sur le revêtement extérieur (4) selon une disposition prédéfinie, et
- le moyen de raidissement plan (6) étant collé au revêtement extérieur (4),
- les profilés (8) et noeuds profilés (10) étant assemblés en une ossature au moins partiellement dans un procédé d'assemblage à froid, et
- cette ossature étant assemblée au revêtement extérieur (4) du côté du moyen de raidissement (6) au moins partiellement dans un procédé d'assemblage à froid.

8. Elément bidimensionnel selon la revendication 7, **caractérisé en ce que** comme moyen de raidissement, des tôles à bosses (6) sont assemblées rigidement au revêtement extérieur (4).

9. Elément bidimensionnel (2) selon la revendication 8, **caractérisé en ce que** les bosses de la tôle à bosses (6) sont réalisées selon une disposition régulière en surface, dans des rangées se croisant, orientées horizontalement et verticalement.

10. Elément bidimensionnel (2) selon la revendication 8, **caractérisé en ce que** les bosses de la tôle à bosses (6) sont réalisées selon une disposition irrégulière en surface dans des rangées se croisant, orientées en oblique.

11. Elément bidimensionnel (2) selon la revendication 8, **caractérisé en ce que** les bosses de la tôle à bosses (6) sont réalisées selon une disposition irrégulière en surface, un plus grand nombre de bosses étant disposées à des intervalles plus petits dans les zones qui doivent présenter une plus grande rigidité au voilement, et inversement.

12. Elément bidimensionnel (2) selon l'une des revendications 7 à 11, **caractérisé en ce qu'**aux jointures ou zones de croisement des profilés (8), on place des noeuds profilés (10) qui prennent, par le dessus, les profilés jointifs ou se croisant, qui sont raccordés aux profilés (8) et qui raidissent les jointures ou zones de croisement des profilés (8).

13. Elément bidimensionnel (2) selon la revendication 12, **caractérisé en ce qu'**au moins une partie des profilés (8) et des extrémités des noeuds profilés (10) tournées vers ceux-ci, présentent une section transversale en forme de chapeau.

14. Elément bidimensionnel (2) selon la revendication 13, **caractérisée en ce que** les noeuds profilés (10) sont fabriqués à l'aide d'une technique d'emboutissage profond.

15. Elément bidimensionnel selon la revendication 7, **caractérisé en ce que** comme moyen de raidissement, on prévoit une tôle de couverture profilée, de la mousse et une tôle de couverture, ou un produit semi-fini composite à base de fibres.
